# EUROPEAN PATENT SPECIFICATION

(11) **EP 4 134 317 B1**
(45) Date of publication and mention of the grant of the patent: **15.10.2025**
(21) Application number: 21784591.6
(22) Date of filing: 06.04.2021
(51) Int. Cl.: B29C 49/06, B29C 49/22, B65D 1/02, B29C 45/16, B29C 45/26, B29C 45/06

(54) **PEELING CONTAINER AND METHOD FOR MANUFACTURING PEELING CONTAINER**
SCHÄLBEHÄLTER UND VERFAHREN ZUR HERSTELLUNG EINES SCHÄLBEHÄLTERS
RÉCIPIENT DE DÉCOLLAGE ET PROCÉDÉ DE FABRICATION DE RÉCIPIENT DE DÉCOLLAGE

(30) Priority: 06.04.2020 JP 2020068177; 19.06.2020 JP 2020106297
(43) Date of publication of application: 15.02.2023
(73) Proprietor: Nissei ASB Machine Co., Ltd., Komoro-shi, Nagano 384-8585 (JP)
(72) Inventor: TAKEHANA, Daizaburo, Komoro-Shi, Nagano 384-8585 (JP); AIKAWA, Muneyoshi, Komoro-Shi, Nagano 384-8585 (JP)
(74) Representative: Mewburn Ellis LLP
(86) International application number: PCT/JP2021/014634
(87) International publication number: WO 2021/206088

(56) References cited:
- JP-A- 2001 114 328
- JP-A- 2001 114 328
- JP-A- 2011 011 767
- JP-A- 2011 011 767
- JP-A- 2015 081 096
- JP-A- 2015 081 096
- JP-A- 2017 154 804
- JP-A- 2017 154 804
- JP-A- 2018 012 511
- JP-A- 2018 012 511
- JP-A- 2018 188 183
- JP-A- 2018 188 183
- JP-A- 2019 116 308
- JP-A- 2019 116 308
- US-A1- 2009 174 102
- US-B1- 6 554 146
- US-B1- 6 554 146

## Description

### Technical Field

The present invention relates to a delamination container and a manufacturing method for the delamination container.

### Background Art

Conventionally, there has been known a resin-made delamination container having a two-layer structure of an inner layer and an outer layer, in which the inner layer is peeled from the outer layer in accordance with discharge of contents thereof. This type of delamination container is also referred to as a delamination bottle or an airless bottle, and is used as, for example, a container of a seasoning liquid such as soy sauce or of a cosmetic liquid of cosmetic products.

At present, in the production of this type of delamination container, an extrusion blow method is generally used, and a stretch blow method is not used as often (see Patent Literature 1).
JP2019116308A discloses a delamination container.
JP2015081096A discloses a plastic bottle.
JP2017154804A discloses a plastic bottle, filling body and method for manufacturing a filling body.
JP2018012511A discloses a delamination container.
JP2011011767A discloses a synthetic resin bottle.
US6554146B1 discloses a single serve plastic container and package incorporating the same.
JP2001114328 discloses a superposed and separable bottle and pump container.
JP2018188183A discloses a double container.
US2009/174102A1 discloses a production method for a delaminatable laminated bottle.

### Citation List

### Patent Literature

Patent Literature 1: JP 5267901

### Summary of Invention

### Technical Problem

For example, from the viewpoint of improving the appearance, dimensional accuracy, physical property strength, and the like of the delamination container and reducing the environmental load of unnecessary materials, applying a blow molding method of a one-stage hot parison type in which an injection molding step to a blow molding step are continuously performed in the production of the delamination container has been considered.

However, in the delamination container, the melting point of the resin material of the outer layer is often set higher than the melting point of the resin material of the inner layer. In the injection molding step for molding a preform having the two-layer structure, when the resin material of outer layer that is at a high temperature is injected after the inner layer is formed, the surface of the inner layer in contact with the resin material of the outer layer is melted and thermally deformed. For this reason, it is extremely difficult to manufacture a delamination container by using a blow molding method of a hot parison type.

In addition, for example, in the case of using a delamination container in which a pump member is attached to a neck portion with one hand, it is preferable employ a shape that takes the grippability of the container in consideration. Meanwhile, for the shape of the delamination container, it is also necessary to consider ease of molding of the container and delamination of the inner layer.

Therefore, the present invention has been made in view of such problems, and it is an object of the present invention to provide a delamination container in which the grippability of the container in one-handed holding is improved while considering ease of molding of the container and delamination of the inner layer.

### Solution to Problem

A delamination container of an aspect of the present invention is as specified in claim 1.

A manufacturing method for the delamination container according to a further aspect of the present invention is as specified in claim 4.

### Advantageous Effects of Invention

According to one aspect of the present invention, it is possible to improve the grippability of the container with one-handed holding while considering ease of molding of the container and delamination of the inner layer.

### Brief Description of Drawings

Fig. 1 is a longitudinal section view of a preform of the present embodiment.
Fig. 2(a) is a front view of a delamination container of the present embodiment, and Fig. 2(b) is a bottom view of the delamination container of the present embodiment.
Fig. 3 is a longitudinal section view of the delamination container of the present embodiment.
Fig. 4 is a diagram schematically illustrating a configuration of a blow molding apparatus according to the present embodiment.
Fig. 5 is a diagram illustrating a manufacturing process of the preform of the present embodiment.
Fig. 6(a) is a diagram illustrating the vicinity of a bottom portion of a first layer in a first injection molding unit, and Fig. 6(b) is a diagram illustrating the vicinity of the bottom portion of the preform in a second injection molding unit.
Fig. 7 is a perspective view of a configuration example of a second cavity mold of the first injection molding unit.

### Description of Embodiments

Hereinafter, an embodiment of the present invention will be described with reference to the drawings.

In the embodiment, for the sake of more understandable description, structures or elements other than the main parts of the present invention will be described in a simplified or omitted manner. In addition, in the drawings, the same elements are denoted by the same reference signs. To be noted, shapes, dimensions, and the like of each element are schematically illustrated in the drawings, and do not indicate actual shapes, dimensions, and the like.

### <Configuration Example of Preform>

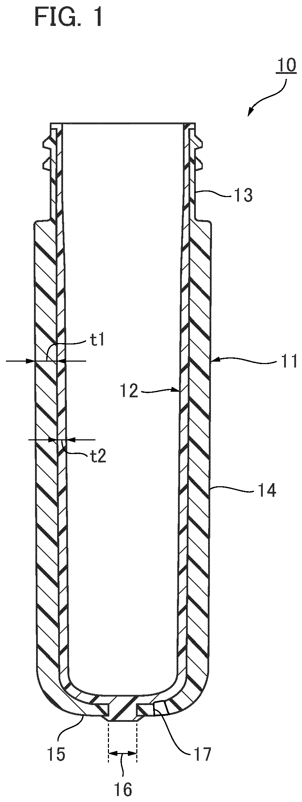

First, a configuration example of a preform for a delamination container according to the present embodiment will be described with reference to Fig. 1. Fig. 1 is a longitudinal section view of a preform 10 of the present embodiment. The overall shape of the preform 10 is a bottomed cylindrical shape in which one end side is open and the other end side is closed. The preform 10 includes a barrel portion 14 formed in a cylindrical shape, a bottom portion 15 that closes the other end side of the barrel portion 14, and a neck portion 13 formed in an opening on the one end side of the barrel portion 14.

The preform 10 has a two-layer structure in which a second layer (inner layer) 12 is formed on the inside of a first layer (outer layer) 11. The first layer 11 and the second layer 12 are formed from different thermoplastic resin materials by two-stage injection molding as will be described later. The first layer 11 is formed from a synthetic resin having excellent moldability and transparency. In contrast, the second layer 12 is formed from a synthetic resin having a property (for example, moisture barrier property, gas barrier property, heat resistance, and chemical resistance) for stably storing the contents of the container and suppressing deterioration (oxidation). In addition, the resin material of the first layer 11 is selected to have a melting point higher than that of the resin material of the second layer 12.

Hereinafter, the resin material of the first layer 11 will be also referred to as a first resin material, and the resin material of the second layer 12 will be also referred to as a second resin material.

The combination of the first resin material and the second resin material can be appropriately selected according to the specification of the delamination container. Specific examples of the material include polyethylene terephthalate (PET), polyethylene naphthalate (PEN), polycyclohexanedimethylene terephthalate (PCTA), Tritan ((registered trademark): co-polyester manufactured by Eastman Chemical), polypropylene (PP), polyethylene (PE), polycarbonate (PC), polyethersulfone (PES), polyphenylsulfone (PPSU), polystyrene (PS), cyclic olefin polymer (COP/COC), polymethyl methacrylate (PMMA): acrylic resin, polylactic acid (PLA), and the like.

For example, the first resin material is polyethylene terephthalate (PET), and the second resin material is polypropylene (PP). The melting point of PP is about 160 to 170°C, and the melting point of PET is higher than the melting point of PP and is about 245 to 260°C.

In the barrel portion 14 of the preform 10, a ratio (t1/t2) of a thickness t1 of the first layer 11 to a thickness t2 of the second layer 12 is preferably 1.5 or more. The thickness ratio is preferably 3.0 or less from the viewpoint of ensuring the transparency of the delamination container to be molded.

In addition, in the bottom portion 15 of the preform 10, an opening portion 16 penetrating the first layer 11 is formed at the center of the bottom portion of the first layer 11. The opening portion 16 of the first layer 11 is closed from the inside by the second layer 12.

In addition, a recess portion 17 for forming an air introduction hole in the delamination container is formed in the bottom portion 15 of the preform 10. The recess portion 17 has, for example, a circular cross section, and is formed at least at one position spaced apart in the radial direction from the center of the bottom portion 15 of the preform 10, but a plurality of recess portions 17 may be formed along the circumferential direction. The depth of the recess portion 17 in the thickness direction of the preform is set to such a dimension in which at least the recess portion 17 penetrates the first layer 11 and the surface of the second layer 12 is exposed in the recess portion 17. To be noted, the recess portion 17 formed in the preform 10 having the two-layer structure may be distinguished from a recess portion (described later) formed only in the first layer 11 and may be referred to as a second recess portion. In addition, the cross section of the recess portion 17 may be a circular shape, an elliptical shape, a polygonal shape, a slit shape, or a shape in which these shapes are combined.

### <Configuration Example of Delamination Container>

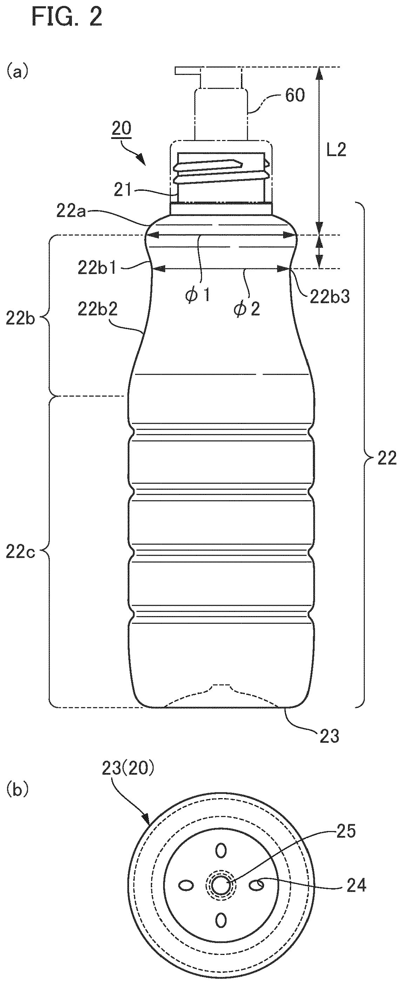

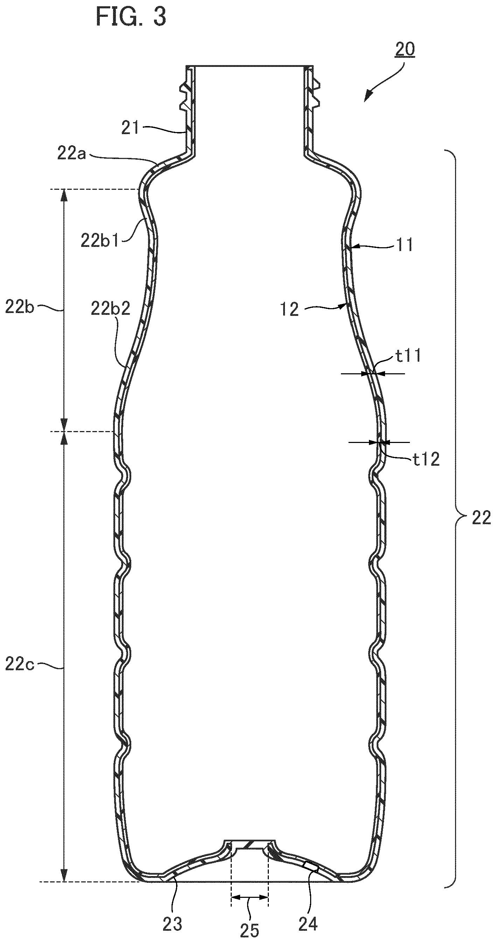

Next, a configuration example of the delamination container 20 formed from resin according to the present embodiment will be described with reference to Figs. 2 and 3. Figs. 2(a) and 2(b) are a front view and a bottom view of the delamination container 20 of the present embodiment. Fig. 3 is a longitudinal section view of the delamination container 20 of the present embodiment.

The delamination container 20 is a bottle-shaped resin container obtained by performing stretch blow molding of the preform 10, and contains, for example, a seasoning liquid such as soy sauce. To be noted, the delamination container 20 may be used to store other contents such as a cosmetic liquid of cosmetic products.

As indicated by a broken line in Fig. 2(a), a nozzle head 60, which is an example of a pump member, is attached in an airtight state to a neck portion 21 of the delamination container 20 to be described later, and thus the container is sealed. The nozzle head 60 ejects a predetermined amount of the contents of the container from the nozzle according to an operation of pushing down a top portion.

As illustrated in Fig. 3, similarly to the preform 10, the delamination container 20 has a two-layer structure in which the second layer 12 having a bag shape is formed on the inside of the first layer 11. In a barrel portion 22 of the delamination container 20, a ratio (t11/t12) of a thickness t11 of the first layer 11 to a thickness t12 of the second layer 12 is substantially similar to the ratio (t1/t2) of the thickness in the barrel portion 14 of the preform 10.

As illustrated in Fig. 2(a), the delamination container 20 includes a neck portion 21 having an opening at an upper end thereof, a cylindrical barrel portion 22 continuous from the neck portion 21, and a bottom portion 23 continuous from the barrel portion 22. The barrel portion 22 includes a shoulder portion 22a having one end connected to the neck portion 21 and expanding in the radial direction toward the other end, a body portion 22c having the other end connected to the bottom portion 23, and a constricted portion 22b connected to the other end of the shoulder portion 22a and one end of the body portion 22c and interconnecting the shoulder portion 22a and the body portion 22c. To be noted, the cross-section of the delamination container 20 has a substantially circular shape at any position in the axial direction.

The constricted portion 22b has a first curved surface portion 22b1 having a diameter decreasing from the outer peripheral edge of the shoulder portion 22a toward the lower side (direction in which the bottom portion is located) and a second curved surface portion 22b2 having a diameter decreasing from one end of the body portion 22c toward the upper side (direction in which the neck portion is located). The diameter of a constricted bottom portion 22b3 which is connected to the first curved surface portion 22b1 and the second curved surface portion 22b2 and has a smallest diameter in the constricted portion 22b is smaller than the diameter of the other end of the shoulder portion 22a (outer peripheral edge of the shoulder portion 22a) and the diameter of the body portion 22c.

The diameter of the outer peripheral edge of the shoulder portion 22a, the diameter of the constricted bottom portion 22b3 in the constricted portion 22b, the dimension from the outer peripheral edge of the shoulder portion 22a to the constricted bottom portion 22b3 in the axial direction, the dimension from the outer peripheral edge of the shoulder portion 22a to the top portion of the nozzle head 60 in the axial direction, and the like are set to specifications that allow the nozzle head 60 to be operated while holding the container by one hand. For example, the delamination container 20 is configured such that the thumb and the middle finger can touch and thus support on the first curved surface portion 22b1 of the constricted portion 22b, and the nozzle head 60 can be pressed with the index finger.

In the case of the above application, when the nozzle head 60 is pressed with the index finger, a force toward the lower side acts on the container, but the shoulder portion 22a protruding with respect to the constricted portion 22b is caught by the thumb and the middle finger supporting the constricted portion 22b to generate a reaction force toward the upper side. As a result, even when the nozzle head 60 is pressed, the container can be stably supported with one hand, and thus the usability of the container can be improved. In addition, since it is not necessary to strongly grip the container when the contents are discharged, the force of the fingers supporting the container and the force of the finger pressing the nozzle head 60 can be reduced.

In addition, the curvature radius (R value) of the first curved surface portion 22b1 is smaller than the curvature radius of the second curved surface portion 22b2. That is, the constricted portion 22b has a shape that is greatly curved at the first curved surface portion 22b1 close to the shoulder portion 22a and is curved more gently than the first curved surface portion 22b1 at the second curved surface portion 22b2 close to the body portion 22c.

As described above, when the curvature radius of the first curved surface portion 22b1 is reduced, the fingers supporting the constricted portion 22b is easily caught by the shoulder portion 22a without slipping, so that the container is more easily supported. In addition, by providing the second curved surface portion 22b2, the thumb, the middle finger, and further the ring finger and the like easily fit into the constricted portion 22b, so that the container can be more easily supported and operated with one hand.

In the case of the delamination container 20 in which the constricted portion 22b is supported by the thumb and the middle finger and the nozzle head 60 is pressed with the index finger as described above, it is preferable to satisfy the following dimensional conditions in consideration of ease of holding with one hand and functionality as a delamination container. For example, the diameter (φ1) of the outer peripheral edge of the shoulder portion 22a is 40 mm or more and 55 mm or less, and the axial length (L1) from the position of the outer peripheral edge of the shoulder portion 22a to the position of the constricted bottom portion of the constricted portion 22b is 12 mm or more and 25 mm or less. In addition, the ratio (φ2/φ1) of the diameter (φ2) of the constricted bottom portion of the constricted portion 22b to the diameter (φ1) of the outer peripheral edge of the shoulder portion 22a is in the range of 0.80 or more and 0.93 or less.

The diameter φ2 of the constricted bottom portion 22b3 of the constricted portion 22b supported by the thumb and the middle finger can be defined from the diameter φ1 of the outer peripheral edge of the shoulder portion 22a and the ratio (φ2/φ1) of the diameter φ2 of the constricted bottom portion 22b3 to the diameter φ1 of the outer peripheral edge of the shoulder portion 22a. When the diameter φ2 of the constricted bottom portion is large, it is difficult to hold and support the container between the thumb and the middle finger, and the usability of the container is degraded. In addition, since the thumb and the middle finger are placed on the first curved surface portion 22b1 of the constricted portion 22b, it is ergonomically preferable that the axial length L1 from the position of the outer peripheral edge of the shoulder portion 22a to the position of the constricted bottom portion 22b3 of the constricted portion 22b is in the range of 12 mm or more and 25 mm or less.

In addition, as the ratio of φ2/φ1 decreases, the finger placed on the constricted bottom portion is more likely to be caught by the shoulder portion 22a. However, if the ratio of φ2/φ1 is reduced and the shoulder portion 22a is formed to protrude largely with respect to the constricted bottom portion, it is difficult to shape the delamination container 20 at the time of blow molding, and furthermore, there is a possibility that the inner layer (second layer 12) is hardly peeled from the outer layer (first layer 11) at the portion where the shoulder portion 22a protrudes when the delamination container 20 is used. From the above viewpoint, by setting the ratio of φ2/φ1 in the range of 0.80 or more and 0.93 or less, it is possible to suppress defective molding of the delamination container 20 and defective peeling of the inner layer while ensuring easy holding of the container.

Furthermore, in order to facilitate the operation of pressing the nozzle head 60 with the index finger while the constricted portion 22b is supported by the thumb and the middle finger, an axial interval L2 from the top of the nozzle head 60 before pressing to the position of the outer peripheral edge of the shoulder portion 22a is preferably 65 mm or less.

In the manufacture of the delamination container 20, the barrel portion 14 and the bottom portion 15 of the preform 10 are expanded by stretch blow to be shaped into the barrel portion 22 and the bottom portion 23 of the delamination container 20. In addition, at the time of the stretch blow, the recess portion 17 of the preform 10 is stretched, and thus at least one air introduction hole 24 penetrating the first layer 11 is formed in the bottom portion 23 of the delamination container 20 as illustrated in Fig. 2(b).

The air introduction hole 24 preferably has a diameter of 0.5 mm or more and a circular or elliptical shape. In addition, a plurality of (for example, 4 or more) air introduction holes 24 are desirably formed in the bottom portion 23 of the delamination container 20. In addition, the plurality of air introduction holes 24 are preferably arranged radially with respect to the center (gate portion) of the bottom portion 23 of the delamination container 20. In the case of forming the plurality of air introduction holes 24, each of the air introduction holes 24 may be formed so as to be point-symmetric with respect to the center of the bottom portion 23, or may be arranged to be deviated from the point-symmetric positions. Fig. 2(b) illustrates an example in which the four air introduction holes 24 are arranged point-symmetrically.

In the delamination container 20, the space inside the second layer 12 is filled with the contents. In the delamination container 20, when the contents are discharged from the second layer 12 by pressing the nozzle head 60, the air gradually flows into a space between the first layer 11 and the second layer 12 from the air introduction hole 24, and the first layer 11 and the second layer 12 are peeled off. As a result, the volume occupied by the contents in the container can be replaced with air without bringing the contents of the second layer 12 into contact with air, and the contents filled into the second layer 12 can be discharged to the outside of the container.

In addition, similarly to the preform 10, an opening portion 25 (non-laminated portion, single layer portion) penetrating the first layer 11 is formed at the center of the bottom portion 23 of the delamination container 20. The opening portion 25 is filled with the material of the second layer 12 to close the opening portion 25, and the second layer 12 is exposed to the outside of the first layer 11 in the vicinity of the opening portion 25 of the bottom portion 23 of the delamination container 20. When the second layer 12 is exposed to the outside of the first layer 11 at the opening portion 25 of the delamination container 20, the second layer 12 is partially fixed to the first layer 11, and misalignment of the second layer 12 with respect to the first layer 11 is suppressed.

### <Description of Manufacturing Apparatus for Delamination Container>

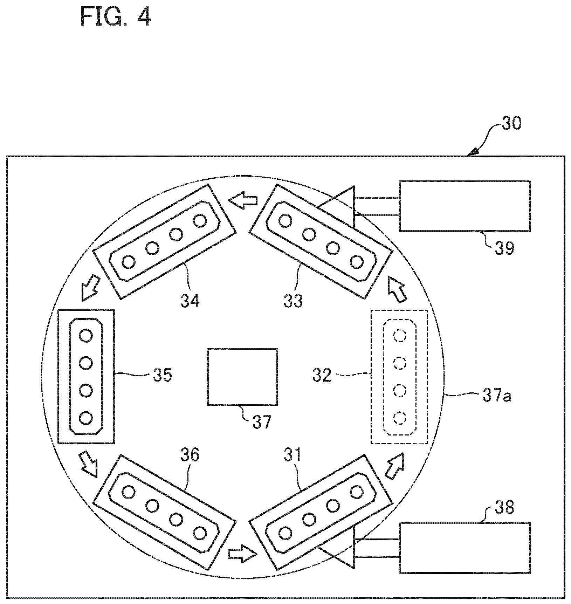

Fig. 4 is a diagram schematically illustrating a configuration of a blow molding apparatus 30 according to the present embodiment. The blow molding apparatus 30 of the present embodiment is an example of a manufacturing apparatus for the delamination container 20, and employs a hot parison method (also referred to as a one-stage method) in which the delamination container 20 is blow-molded by utilizing residual heat (internal heat amount) from injection molding without cooling the preform 10 to room temperature.

The blow molding apparatus 30 includes a first injection molding unit 31, a first temperature adjustment unit 32, a second injection molding unit 33, a second temperature adjustment unit 34, a blow molding unit 35, a taking-out unit 36, and a conveyance mechanism 37. The first injection molding unit 31, the first temperature adjustment unit 32, the second injection molding unit 33, the second temperature adjustment unit 34, the blow molding unit 35, and the taking-out unit 36 are disposed at positions rotated by the same predetermined angle (for example, 60 degrees) about the conveyance mechanism 37. To be noted, the blow molding apparatus 30 may omit the first temperature adjustment unit 32 (in this case, each molding station is disposed at a position rotated by 72 degrees about the conveyance mechanism 37). In addition, in the first injection molding unit 31 and the second injection molding unit 33, an unillustrated core mold elevation mechanism is provided above the conveyance mechanism 37.

### (Conveyance Mechanism 37)

The conveyance mechanism 37 includes a rotating plate (transfer plate) 37a that rotates about a shaft in a direction perpendicular to the paper surface of Fig. 4. On the rotating plate 37a, one or more neck molds 37b (not illustrated in Fig. 4) for holding the neck portion 13 of the preform 10 (or the neck portion 21 of the delamination container 20) are arranged at each predetermined angle. The conveyance mechanism 37 rotates the rotating plate 37a to convey the preform 10 (or the delamination container 20) held by the neck mold 37b to the first injection molding unit 31, the second injection molding unit 33, the second temperature adjustment unit 34, the blow molding unit 35, and the taking-out unit 36 in this order. To be noted, the conveyance mechanism 37 can also move up and down the rotating plate 37a, and also performs operations related to mold closing and mold opening (mold releasing) in the first injection molding unit 31 and the second injection molding unit 33.

### (First Injection Molding Unit 31)

The first injection molding unit 31 includes a cavity mold 40, a core mold 41, and a hot runner mold 42, and manufactures the first layer 11 of the preform 10 in cooperation with the neck mold 37b conveyed at the time of molding. The cavity mold 40 includes a first cavity mold 40A on the opening side (upper side) and a second cavity mold 40B on the bottom surface side (lower side). A first injection device 38 that supplies a first resin material to the hot runner mold 42 is connected to the first injection molding unit 31. The cavity mold 40 and the hot runner mold 42 are fixed to a machine base of the blow molding apparatus 30 in an integrated state. The core mold 41 is fixed to a core mold elevation mechanism.

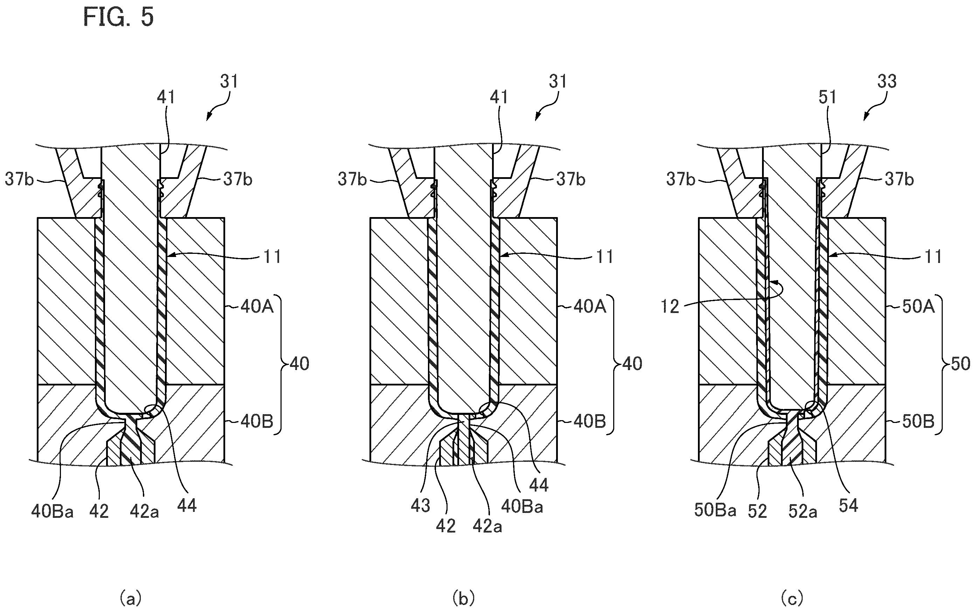

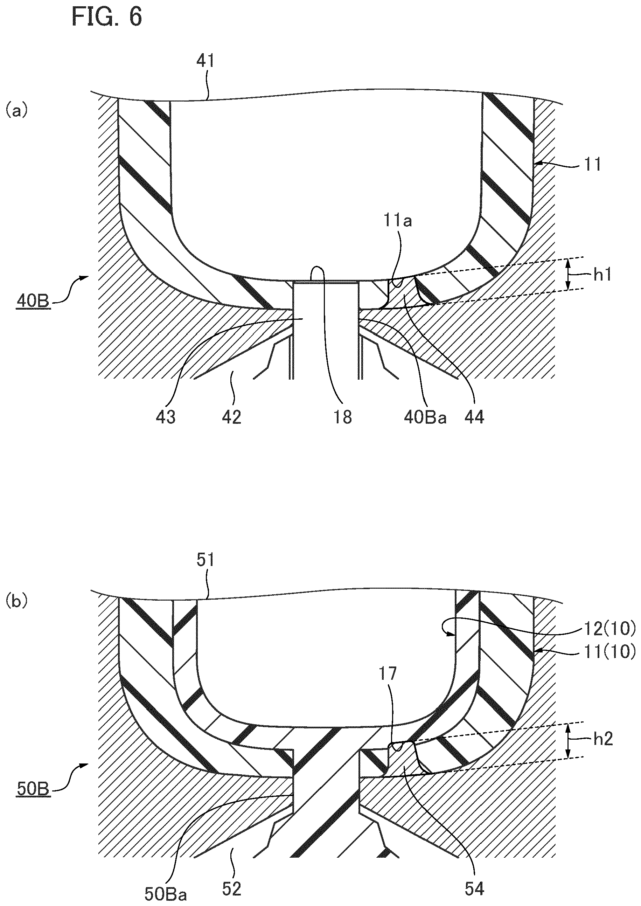

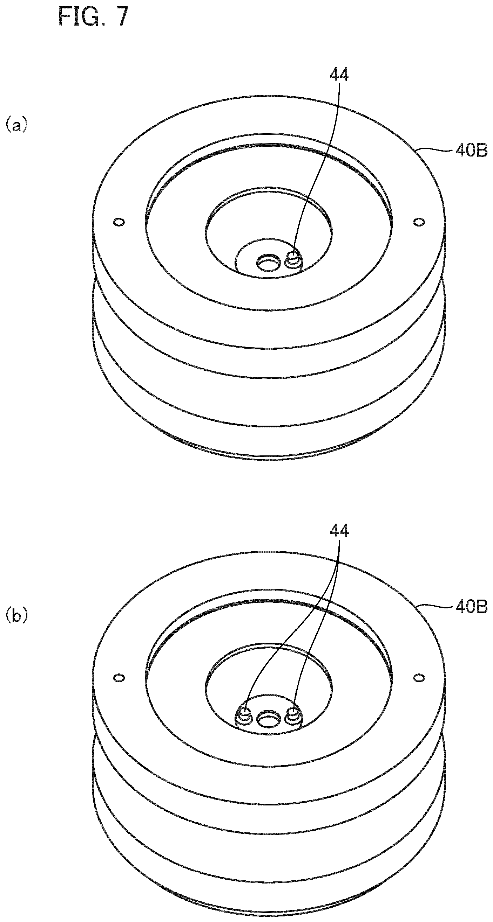

Figs. 5(a) and 5(b) illustrate the first injection molding unit 31 that molds the first layer 11 of the preform 10 of the present embodiment. Fig. 6(a) is a diagram illustrating the vicinity of the bottom portion of the first layer 11 in the first injection molding unit 31. Fig. 7 is a perspective view illustrating a configuration example of the cavity mold 40 (second cavity mold 40B) of the first injection molding unit 31.

The cavity mold 40 defines (determines) the shape of the outer periphery of the first layer 11. The first cavity mold 40A is a mold facing the opening side of the cavity mold 40 (the side in contact with the neck mold 37b when the mold is closed), and defines the shape of the outer periphery of the barrel portion of the first layer 11. The second cavity mold 40B is a mold facing the bottom surface side (the side in contact with the hot runner mold 42) of the cavity mold 40, and defines the shape of the outer periphery of the bottom portion of the first layer 11. The second cavity mold 40B further includes a gate portion 40Ba that guides the resin material from the hot runner mold 42 to the cavity surface. In addition, the hot runner mold 42 includes a resin supply portion 42a that introduces the first resin material plasticized (melted) by the first injection device 38 into the second cavity mold 40B. The core mold 41 is a mold that defines the shape of the inner peripheral side of the first layer 11, and is inserted into the inner peripheral side of the cavity mold 40 from above. In addition, the neck mold 37b conveyed at the time of molding defines the outer shape of the neck portion 13 of the preform 10 (first layer 11).

As illustrated in Figs. 5(a) and 5(b), in the first injection molding unit 31, the cavity mold 40, the core mold 41, and the neck mold 37b of the conveyance mechanism 37 are closed to form a mold space for the first layer 11. Then, the first resin material is poured from the bottom portion of the mold space described above through the hot runner mold 42, and thus the first layer 11 of the preform 10 is manufactured in the first injection molding unit 31.

A first protrusion portion 44 having a columnar shape (alternatively, a tapered columnar shape or a prismatic shape) is provided at a predetermined position on the upper surface side (cavity surface side) of the second cavity mold 40B facing the outer periphery of the bottom portion of the first layer 11. As illustrated in Fig. 7(a), at least one first protrusion portion 44 is disposed at an interval in the radial direction from the center of the bottom portion where the resin supply portion 42a is located. As illustrated in Fig. 6(a), a protrusion amount h1 of the first protrusion portion 44 with respect to the cavity standard surface of the second cavity mold 40B (the cavity surface that defines the shape of the lower end side of the outer peripheral surface of the bottom portion of the first layer 11) is substantially the same dimension as the thickness of the first layer 11. Therefore, when the molds of the first injection molding unit 31 are closed, the distal end of the first protrusion portion 44 faces the surface of the core mold 41 (disposed in the vicinity of the surface of the core mold 41). As a result, in the injection molding of the first injection molding unit 31, a recess portion 11a such as a circular shape is formed in the first layer 11 at a position corresponding to the recess portion 17 of the preform 10 by the first protrusion portion 44. The recess portion 11a of the first layer 11 may penetrate the first layer 11, or may have a thin film formed between the core mold 41 and the first protrusion portion 44. To be noted, the recess portion 11a of the first layer 11 formed by the first injection molding unit 31 is also referred to as a first recess portion.

In addition, as illustrated in Fig. 5(b), the resin supply portion 42a of the hot runner mold 42 is provided with a valve pin (a bar-shaped member that opens and closes the resin supply portion 42a) 43 that is movable in the axial direction to a position close to the core mold 41. The valve pin 43 is accommodated in the hot runner mold 42 until the mold space is filled with the first resin material, and protrudes to a position closer to the core mold 41 than the opening end on the cavity side of the gate portion 40Ba after the mold space is filled with the first resin material. By such movement of the valve pin 43 during injection molding, a thin film portion 18 in which the thickness of the resin material is smaller than that of the peripheral portion can be formed at the center of the bottom portion of the first layer 11.

In addition, even when the molds of the first injection molding unit 31 are opened, the neck mold 37b of the conveyance mechanism 37 keeps on holding and conveying the first layer 11 of the preform 10 without opening. The number of the preforms 10 simultaneously molded by the first injection molding unit 31 (that is, the number of the delamination containers 20 that can be simultaneously molded by the blow molding apparatus 30) can be appropriately set.

### (First Temperature Adjustment Unit 32)

The first temperature adjustment unit 32 includes an unillustrated temperature adjustment mold (a heating pot or a temperature adjustment pot (conditioning pot) that adjusts the temperature of the first layer 11 from the outside, and a heating rod, a temperature adjustment rod (conditioning rod), or an air introduction rod that adjusts the temperature of the first layer 11 from the inside).

The first temperature adjustment unit 32 cools (or heats) the first layer 11 in a high-temperature state after injection molding by accommodating the first layer 11 in the temperature adjustment mold maintained at a predetermined temperature. In addition, the first temperature adjustment unit 32 also has a function of adjusting the temperature distribution of the first layer 11 to a predetermined state before being conveyed to the second injection molding unit 33.

### (Second Injection Molding Unit 33)

The second injection molding unit 33 includes a cavity mold 50, a core mold 51, and a hot runner mold 52, and performs injection molding of the second layer 12 on the inner peripheral side of the first layer 11 in cooperation with the neck mold 37b conveyed at the time of molding. The cavity mold 50 includes a first cavity mold 50A on the opening side (upper side) and a second cavity mold 50B on the bottom surface side (lower side). A second injection device 39 that supplies a second resin material to the hot runner mold 52 is connected to the second injection molding unit 33.

Fig. 5(c) illustrates the second injection molding unit 33 that molds the second layer 12 of the preform 10. Fig. 6(b) is a diagram illustrating the vicinity of the bottom portion of the preform 10 in the second injection molding unit 33.

The cavity mold 50 is a mold that accommodates the first layer 11. The first cavity mold 50A is a mold facing the opening side of the cavity mold 50, and accommodates the barrel portion of the first layer 11. The second cavity mold 50B is a mold facing the bottom surface side of the cavity mold 50, and accommodates the bottom portion of the first layer 11. The second cavity mold 50B further includes a gate portion 50Ba that guides the resin material from the hot runner mold 52 to the cavity surface. In addition, the hot runner mold 52 includes a resin supply portion 52a that introduces the second resin material plasticized (melted) by the second injection device 39. The core mold 51 is a mold that defines the shape of the inner peripheral side of the second layer 12, and is inserted into the inner peripheral side of the cavity mold 50 from above. In addition, the neck mold 37b conveyed at the time of molding defines an upper end surface (top surface) of the neck portion 13 of the preform 10 (second layer 12). Note that the hot runner mold 52 may have a structure including a valve pin like the hot runner mold 42. However, the position of the valve pin when closing the second resin material is set to a position not protruding from the opening end on the cavity side of the gate portion 50Ba.

As illustrated in Fig. 5(c), the second injection molding unit 33 accommodates the first layer 11 of the preform 10 injection-molded by the first injection molding unit 31. In a state where the molds of the second injection molding unit 33 are closed, a mold space is formed between the inner peripheral side of the first layer 11 and the surface of the core mold 51. In the second injection molding unit 33, the second resin material is poured from the bottom portion of the mold space described above through the hot runner mold 52 to form the preform 10 in which the second layer 12 is formed on the inner peripheral side of the first layer 11.

In addition, on the upper surface side (cavity surface side) of the second cavity mold 50B facing the outer periphery of the bottom portion of the first layer 11, a second protrusion portion 54 having a columnar shape or the like corresponding to the shape of the recess portion 17 of the preform 10 is provided at a predetermined position corresponding to the first protrusion portion 44 of the first injection molding unit 31. The second protrusion portion 54 is inserted into the recess portion 11a of the first layer 11 when the first layer 11 is accommodated in the second injection molding unit 33. As described above, the basic configuration of the protrusion and the like in the second cavity mold 50B is substantially similar to that of the second cavity mold 40B of the first injection molding unit 31.

Here, as illustrated in Fig. 6(b), a protrusion amount h2 of the second protrusion portion 54 from the cavity standard surface of the second cavity mold 50B (the cavity surface in contact with a lower end side region of the outer peripheral surface of the bottom portion of the first layer 11) is a larger dimension than the thickness of the first layer 11. That is, the protrusion amount h2 of the second protrusion portion 54 is larger than the protrusion amount h1 of the first protrusion portion 44 (h2 > h1). Therefore, when the molds of the second injection molding unit 33 are closed, the distal end of the second protrusion portion 54 penetrates the recess portion 11a of the first layer 11 and protrudes to the inner peripheral side of the first layer 11. By providing the second protrusion portion 54 in the second cavity mold 50B of the second injection molding unit 33, the recess portion 17 can be formed in the bottom portion 15 of the preform 10.

In addition, the protrusion amount h2 of the second protrusion portion 54 is set to be smaller than the thickness of the preform 10. That is, in the injection molding in the second injection molding unit 33, since the second resin material flows into a space between the core mold 51 and the second protrusion portion 54, a hole penetrating the second layer 12 is not formed by the second protrusion portion 54.

### (Second Temperature Adjustment Unit 34)

The second temperature adjustment unit 34 includes an unillustrated temperature adjustment mold unit (a heating pot or a temperature adjustment pot (conditioning pot) that adjusts the temperature of the preform 10 from the outside, and a heating rod, a temperature adjustment rod (conditioning rod), or an air introduction rod that adjusts the temperature of the preform 10 from the inside). The second temperature adjustment unit 34 accommodates the preform 10 conveyed from the second injection molding unit 33 in a mold unit maintained at a predetermined temperature to equalize temperature and remove temperature unevenness, and adjusts the temperature of the preform 10 to a temperature suitable for final blowing (for example, about 90°C to 105°C). In addition, the second temperature adjustment unit 34 also has a function of cooling the preform 10 in a high temperature state after injection molding.

### (Blow Molding Unit 35)

The blow molding unit 35 performs blow molding on the preform 10 whose temperature has been adjusted by the second temperature adjustment unit 34 to manufacture the delamination container 20.

The blow molding unit 35 includes a blow cavity mold which is a pair of split molds corresponding to the shape of the delamination container 20, a bottom mold, a stretching rod, and an air introduction member (all not illustrated). The blow molding unit 35 blow-molds the preform 10 while stretching the preform 10. As a result, the preform 10 is shaped into the shape of the blow cavity mold, and the delamination container 20 can be manufactured.

### (Taking-out Unit 36)

The taking-out unit 36 is configured to release the neck portion 21 of the delamination container 20 manufactured by the blow molding unit 35 from the neck mold 37b and take out the delamination container 20 to the outside of the blow molding apparatus 30.

### <Description of Manufacturing Method for Container>

Next, a manufacturing method for the delamination container 20 by the blow molding apparatus 30 of the present embodiment will be described.

### (Step S101: First Injection Molding Step)

First, as illustrated in Fig. 5(a), in the first injection molding unit 31, the first resin material is injected from the first injection device 38 into the mold space formed by the cavity mold 40, the core mold 41, and the neck mold 37b, and the first layer 11 of the preform 10 is formed. At this time, the first protrusion portion 44 forms the recess portion 11a at the bottom portion of the first layer 11.

In the first injection molding unit 31, as illustrated in Fig. 5(b), after the first layer 11 of the preform 10 is formed, a step of protruding the valve pin 43 to a position close to the core mold 41 is performed. As a result, the thin film portion 18 having a thickness smaller than that of the peripheral portion is formed at the center of the bottom portion of the first layer 11.

Thereafter, the molds of the first injection molding unit 31 are opened to release the first layer. When the molds of the first injection molding unit 31 are opened, the rotating plate 37a of the conveyance mechanism 37 rotates by a predetermined angle, and the first layer 11 of the preform 10 held by the neck mold 37b is conveyed to the first temperature adjustment unit 32 in a state of having residual heat from injection molding.

### (Step S102: First Temperature Adjustment Step)

Next, in the first temperature adjustment unit 32, the first layer 11 of the preform 10 is accommodated in the temperature adjustment mold, and cooling of the first layer 11 and adjustment of the temperature distribution (temperature equalization and removal of temperature unevenness) are performed. To be noted, the first temperature adjustment step may be omitted.

After the first temperature adjustment step (or the first injection molding step), the rotating plate 37a of the conveyance mechanism 37 rotates by a predetermined angle, and the first layer 11 having undergone temperature adjustment and held in the neck mold 37b is conveyed to the second injection molding unit 33.

### (Step S103: Second Injection Molding Step)

Subsequently, the first layer 11 of the preform 10 is accommodated in the second injection molding unit 33, and injection molding of the second layer 12 is performed.

In the second injection molding unit 33, as illustrated in Fig. 5(c), a mold space is formed between the inner peripheral side of the first layer 11 and the surface of the core mold 51 facing the inner periphery of the first layer 11, and the second resin material is injected into the mold space described above from the hot runner mold 52. To be noted, although the thin film portion 18 is formed at the bottom portion of the first layer 11, the thin film portion 18 is broken by the injection pressure of the second resin material to form an opening portion 16 at the bottom portion, and the second resin material is guided from the opening portion 16 to the inner peripheral side of the first layer 11.

Here, the temperature of the second resin material injected in the second injection molding unit 33 is set to a temperature lower than the melting point of the first resin material. In addition, the surface temperature of the first layer 11 when the second resin material is injected in the second injection molding unit 33 is cooled to a temperature equal to or lower than the melting point of the second resin material.

In the second injection molding unit 33, the cavity mold 50 faces the outer peripheral side of the first layer 11, and the shape of the first layer 11 is held by the cavity mold 50 from the outer peripheral side. Therefore, even when the second resin material comes into contact with first layer 11, thermal deformation of first layer 11 can be suppressed.

In addition, in the second injection molding unit 33, since the second protrusion portion 54 penetrates and closes the recess portion 11a of the first layer 11, the recess portion 17 of the preform 10 is not closed by the second resin material. In addition, since the distal end of the second protrusion portion 54 in the second injection molding unit 33 protrudes to the inner peripheral side of the first layer, the recess portion 17 of the preform 10 formed by the second protrusion portion 54 has a shape that penetrates the first layer 11 and the surface of the second layer 12 is exposed in the recess portion 17.

As described above, the preform 10 in which the second layer 12 is formed on the inner peripheral side of the first layer 11 is manufactured by the first injection molding step and the second injection molding step.

Thereafter, when the molds of the second injection molding unit 33 are opened, the rotating plate 37a of the conveyance mechanism 37 rotates by a predetermined angle, and the preform 10 held by the neck mold 37b is conveyed to the second temperature adjustment unit 34 in a state of having residual heat from injection molding.

### (Step S104: Second Temperature Adjustment Step)

Subsequently, in the second temperature adjustment unit 34, the preform 10 is accommodated in the temperature adjustment mold unit, and temperature adjustment for bringing the temperature of the preform 10 closer to a temperature suitable for final blowing is performed. Thereafter, the rotating plate 37a of the conveyance mechanism 37 rotates by a predetermined angle, and the preform 10 having undergone temperature adjustment and held in the neck mold 37b is conveyed to the blow molding unit 35.

### (Step S105: Blow Molding Step)

Subsequently, in the blow molding unit 35, blow molding of the delamination container 20 is performed.

First, the blow cavity mold is closed to accommodate the preform 10 in the mold space, and the air introduction member (blow core) is lowered, so that the air introduction member abuts the neck portion 13 of the preform 10. Then, the stretching rod is lowered to press the bottom portion 15 of the preform 10 from the inside, and blow air is supplied from the air introduction member while performing longitudinal axis stretching as necessary, and thus the preform 10 is stretched in the lateral axis. As a result, the preform 10 is shaped by being bulged so as to be in close contact with the mold space of the blow cavity mold, and is thus blow-molded into the delamination container 20.

### (Step S106: Container Take-out Step)

When the blow molding is completed, the blow cavity mold is opened. As a result, the delamination container 20 becomes movable from the blow molding unit 35.

Subsequently, the rotating plate 37a of the conveyance mechanism 37 rotates by a predetermined angle, and the delamination container 20 is conveyed to the taking-out unit 36. In the taking-out unit 36, the neck portion 21 of the delamination container 20 is released from the neck mold 37b, and the delamination container 20 is taken out to the outside of the blow molding apparatus 30.

Thus, one cycle in the manufacturing method for the delamination container ends. Thereafter, by rotating the rotating plate 37a of the conveyance mechanism 37 by a predetermined angle, the respective steps of S101 to S106 described above are repeated. To be noted, during the operation of the blow molding apparatus 30, six sets of the delamination containers 20 are manufactured in parallel at a time difference of one step each.

In addition, due to the structure of the blow molding apparatus 30, the waiting times of the first injection molding step, the first temperature adjustment step, the second injection molding step, the second temperature adjustment step, the blow molding step, and the container take-out step are the same. Similarly, the conveyance times between the steps are also the same.

Hereinafter, effects of the blow molding apparatus and the blow molding method of the present embodiment will be described.

In the present embodiment, the first layer 11 (outer layer) of the preform 10 is molded in the first injection molding step, and the second layer 12 (inner layer) is injection-molded on the inside of the first layer 11 from the opening portion 16 of the first layer 11 in the second injection molding step to manufacture the preform 10 having a two-layer structure. According to the present embodiment, the outer layer can be first formed from a resin material having a high melting point, and then the inner layer can be formed from a resin material having a melting point lower than that of the outer layer. That is, the injection molding of the inner layer can be continuously performed while the outer layer has the residual heat from the injection molding, so that the preform 10 having the two-layer structure suitable for the specification of the delamination container 20 can be manufactured. In the present embodiment, since the preform 10 having a two-layer structure is released in a state where both the outer layer and the inner layer have residual heat from injection molding, it is possible to obtain the preform 10 suitable for manufacturing the delamination container 20 by a blow molding method of a hot parison type.

Further, in the present embodiment, the preform 10 having the two-layer structure described above is subjected to stretch blow molding in a state where the preform 10 has the residual heat from injection molding to manufacture the delamination container 20. Therefore, in the present embodiment, the delamination container 20 having excellent aesthetic appearance, physical property strength, and the like can be manufactured by a blow molding method of a hot parison type. As compared with blow molding of a cold parison type, in the present embodiment, it is not necessary to cool the produced preform 10 to near room temperature, and the step of reheating the preform 10 is also unnecessary. Therefore, according to the present embodiment, a series of steps from injection molding of the preform 10 to blow molding of the delamination container 20 can be completed in a relatively short time, and the delamination container 20 can be manufactured in a shorter cycle.

In addition, in the present embodiment, the first protrusion portion 44 forms the recess portion 11a in the first layer 11 in the first injection molding step. Then, in the second injection molding step, the second protrusion portion 54 having a larger protrusion amount than the first protrusion portion 44 penetrates the recess portion 11a of the first layer 11 to form the recess portion 17 in the bottom portion 15 of the preform 10. As a result, in the delamination container 20, the air introduction hole 24 that penetrates the first layer 11 and reaches the surface of the second layer 12 can be reliably formed.

The present invention is not limited to the above embodiment, and various improvements and design changes may be made without departing from the scope of the appended claims.

In the above embodiment, an example in which one recess portion 17 is provided in the bottom portion 15 of the preform 10 has been described, but for example, a plurality of recess portions 17 may be formed. Fig. 7(b) illustrates an example in which the first protrusion portions 44 are provided at two positions in the second cavity mold 40B of the first injection molding unit 31. In the example of Fig. 7(b), the two first protrusion portions 44 are arranged at point-symmetrical positions with respect to the central axis at an interval of 180°. To be noted, the number of the first protrusion portions 44 may be three or more. In this case, it is preferable that the first protrusion portions 44 are arranged in a point-symmetric positional relationship with respect to the central axis.

According to the above configuration, the unevenness of the flow of the resin in the circumferential direction during the injection molding is further reduced. To be noted, in the case of the above configuration, it is also necessary to arrange second protrusion portions 54 at positions similar to the first protrusion portions 44 also in the second injection molding unit 33.

In addition, the embodiment disclosed herein should be considered in all respects as illustrative and not restrictive. The scope of the present invention is indicated not by the above description but by the claims.

### Reference Signs List

- 10: preform
- 11: first layer
- 11a: recess portion
- 12: second layer
- 16: opening portion
- 17: recess portion
- 18: thin film portion
- 20: delamination container
- 24: air introduction hole
- 30: blow molding apparatus
- 31: first injection molding unit
- 32: first temperature adjustment unit
- 33: second injection molding unit
- 34: second temperature adjustment unit
- 35: blow molding unit
- 38: first injection device
- 39: second injection device
- 40B, 50B: cavity mold
- 44: first protrusion portion
- 54: second protrusion portion

## Claims

1. A delamination container (20) including an outer layer (11) formed from a first resin material and a bagshaped inner layer (12) provided on an inner peripheral side of the outer layer (11) and formed from a second resin material different from the first resin material, the outer layer (11) being provided with a hole (24) for introducing air into a gap between the outer layer (11) and the inner layer (12), the delamination container (20) comprising:
a neck portion (13) having an opening communicating with an inside of the inner layer (12);
a shoulder portion (22a) continuously extending in the radial direction from the neck portion (13);
a body portion (22c) having a bottomed cylindrical shape; and
a constricted portion (22b) interconnecting the shoulder portion (22a) and the body portion (22c),
**characterized in that**
a cross-section of the delamination container (20) in the direction perpendicular to the axial direction has a circular shape,
wherein a diameter of an outer peripheral edge of the shoulder portion (22a) is 40 mm or more and 55 mm or less,
an axial length from the outer peripheral edge of the shoulder portion (22a) to a constricted bottom portion (22b3) which has a smallest diameter in the constricted portion (22b) is 12 mm or more and 25 mm or less,
and a ratio of the diameter of the constricted bottom portion (22b3) to the diameter of the outer peripheral edge of the shoulder portion (22a) is 0.80 or more and 0.93 or less.

2. The delamination container (20) according to claim 1,
wherein the constricted portion (22b) includes a first curved surface portion (22b1) which is connected to the shoulder portion (22a) and having a diameter decreasing toward the constricted bottom portion (22b3), and a second curved surface portion (22b2) which is connected to the body portion (22c) and having a diameter decreasing toward the constricted bottom portion (22b3), and
a curvature radius of the first curved surface portion (22b1) is smaller than a curvature radius of the second curved surface portion (22b2).

3. The delamination container (20) according to claim 1 or 2,
wherein a pump member (60) that ejects contents of the inner layer (12) by pressuring a top portion is attached to the neck portion (13), and
an axial length from the top portion of the pump member (60) to the outer peripheral edge of the shoulder portion (22a) is 65 mm or less.

4. A manufacturing method for the delamination container (20) according to any one of claims 1 to 3, the manufacturing method comprising:
a first injection molding step of injection-molding a first layer (11) of a preform (10) having a bottomed cylindrical shape from a first resin material;
a second injection molding step of injecting a second resin material different from the first resin material to form a second layer (12) on an inner peripheral side of the first layer (11); and
a blow molding step of blow-molding, in a state of having residual heat from injection molding, the preform (10) obtained in the second injection molding step, to manufacture the delamination container (20),
wherein, in the first injection molding step, a first recess portion (11a) is formed by a first protrusion portion (44) in at least part of the first layer (11),
in the second injection molding step, a second recess portion (17) which penetrates the first layer (11) and through which a surface of the second layer (12) is exposed is formed in the preform (10) by inserting a second protrusion portion (54) into the first recess portion (11a), and
in the blow molding step, the second recess portion (17) is stretched to form an air introduction hole (24) in an outer layer (11) of the delamination container (20).

## Patentansprüche

1. Delaminierungsbehälter (20), umfassend eine Außenschicht (11), die aus einem ersten Harzmaterial ausgebildet ist, und eine beutelförmige Innenschicht (12), die auf einer Innenumfangsseite der Außenschicht (11) bereitgestellt und aus einem zweiten Harzmaterial, das sich von dem ersten Harzmaterial unterscheidet, ausgebildet ist, wobei die Außenschicht (11) mit einem Loch (24) zum Einbringen von Luft in einen Spalt zwischen der Außenschicht (11) und der Innenschicht (12) bereitgestellt ist, wobei der Delaminierungsbehälter (20) Folgendes umfasst:
einen Halsabschnitt (13) mit einer Öffnung, die mit einem Inneren der Innenschicht (12) kommuniziert;
einen Schulterabschnitt (22a), der sich in die radiale Richtung kontinuierlich vom Halsabschnitt (13) weg erstreckt;
einen Körperabschnitt (22c) mit einer mit einem Boden versehenen zylindrischen Form; und
einen verengten Abschnitt (22b), der den Schulterabschnitt (22a) und den Körperabschnitt (22c) miteinander verbindet,
**dadurch gekennzeichnet, dass**
ein Querschnitt des Delaminierungsbehälters (20) in die Richtung senkrecht zur axialen Richtung eine Kreisform aufweist,
wobei ein Durchmesser einer Außenumfangskante des Schulterabschnitts (22a) 40 mm oder mehr und 55 mm oder weniger beträgt,
eine axiale Länge von der Außenumfangskante des Schulterabschnitts (22a) bis zu einem verengten Bodenabschnitt (22b3), der einen kleinsten Durchmesser im verengten Abschnitt (22b) aufweist, 12 mm oder mehr und 25 mm oder weniger beträgt
und ein Verhältnis des Durchmessers des verengten Bodenabschnitts (22b3) zum Durchmesser der Außenumfangskante des Schulterabschnitts (22a) 0,80 oder mehr und 0,93 oder weniger beträgt.

2. Delaminierungsbehälter (20) nach Anspruch 1,
wobei der verengte Abschnitt (22b) einen ersten gekrümmten Oberflächenabschnitt (22b1), der mit dem Schulterabschnitt (22a) verbunden ist und einen in Richtung des verengten Bodenabschnitts (22b3) abnehmenden Durchmesser aufweist, und einen zweiten gekrümmten Oberflächenabschnitt (22b2), der mit dem Körperabschnitt (22c) verbunden ist und einen in Richtung des verengten Bodenabschnitts (22b3) abnehmenden Durchmesser aufweist, umfasst und wobei
ein Krümmungsradius des ersten gekrümmten Oberflächenabschnitts (22b1) kleiner ist als ein Krümmungsradius des zweiten gekrümmten Oberflächenabschnitts (22b2).

3. Delaminierungsbehälter (20) nach Anspruch 1 oder 2,
wobei ein Pumpenelement (60), das Inhalte der Innenschicht (12) ausstößt, indem es einen oberen Abschnitt druckbeaufschlagt, an dem Halsabschnitt (13) befestigt ist und wobei
eine axiale Länge vom oberen Abschnitt des Pumpenelements (60) bis zur Außenumfangskante des Schulterabschnitts (22a) 65 mm oder weniger beträgt.

4. Herstellungsverfahren für einen Delaminierungsbehälter (20) nach einem der Ansprüche 1 bis 3, wobei das Herstellungsverfahren Folgendes umfasst:
einen ersten Spritzgießschritt des Spritzgießens einer ersten Schicht (11) einer Vorform (10) mit einer mit einem Boden versehenen zylindrischen Form aus einem ersten Harzmaterial;
einen zweiten Spritzgießschritt des Einspritzens eines zweiten Harzmaterials, das sich von dem ersten Harzmaterial unterscheidet, um eine zweite Schicht (12) auf einer Innenumfangsseite der ersten Schicht (11) auszubilden;
einen Blasformschritt des Blasformens der im zweiten Spritzgießschritt erhaltenen Vorform (10) in einem Zustand des Aufweisens von Resthitze von dem Spritzgießen, um den Delaminierungsbehälter (20) herzustellen,
wobei im ersten Spritzgießschritt ein erster Aussparungsabschnitt (11a) durch einen ersten Vorsprungsabschnitt (44) in zumindest einem Teil der ersten Schicht (11) ausgebildet wird, wobei
im zweiten Spritzgießschritt ein zweiter Aussparungsabschnitt (17), der die erste Schicht (11) durchdringt und über den eine Oberfläche der zweiten Schicht (12) freigelegt wird, in der Vorform (10) ausgebildet wird, indem ein zweiter Vorsprungsabschnitt (54) in den ersten Aussparungsabschnitt (11a) eingebracht wird, und wobei
im Blasformschritt der zweite Aussparungsabschnitt (17) gestreckt wird, um ein Lufteinbringungsloch (24) in einer Außenschicht (11) des Delaminierungsbehälters (20) auszubilden.

## Revendications

1. Conteneur de délamination (20) comportant une couche externe (11) formée d'un premier matériau résineux et une couche interne (12) en forme de sac disposée sur un côté périphérique interne de la couche externe (11) et formée d'un second matériau résineux différent du premier matériau résineux, la couche externe (11) étant pourvue d'un trou (24) pour introduire de l'air dans un espace entre la couche externe (11) et la couche interne (12), le conteneur de délamination (20) comprenant :
une portion col (13) ayant une ouverture communiquant avec un intérieur de la couche interne (12) ;
une portion épaulement (22a) s'étendant en continu dans la direction radiale à partir de la portion col (13) ;
une portion corps (22c) ayant une forme cylindrique à fond ; et
une portion rétrécie (22b) interconnectant la portion épaulement (22a) et la portion corps (22c),
**caractérisé en ce que**
une section transversale du conteneur de délamination (20) dans la direction perpendiculaire à la direction axiale a une forme circulaire,
dans lequel un diamètre d'un bord périphérique externe de la portion épaulement (22a) est de 40 mm ou plus et de 55 mm ou moins,
une longueur axiale allant du bord périphérique externe de la portion épaulement (22a) à une portion inférieure rétrécie (22b3) qui a un diamètre le plus petit dans la portion rétrécie (22b) est de 12 mm ou plus et de 25 mm ou moins,
et un rapport entre le diamètre de la portion inférieure rétrécie (22b3) et le diamètre du bord périphérique externe de la portion épaulement (22a) est égal à 0,80 ou plus et à 0,93 ou moins.

2. Conteneur de délamination (20) selon la revendication 1,
dans lequel la partie rétrécie (22b) comporte une première portion de surface incurvée (22b1) qui est connectée à la portion épaulement (22a) et ayant un diamètre diminuant vers la portion inférieure rétrécie (22b3), et une seconde portion de surface incurvée (22b2) qui est connectée à la portion corps (22c) et ayant un diamètre diminuant vers la portion inférieure rétrécie (22b3), et
un rayon de courbure de la première portion de surface incurvée (22b1) est plus petit qu'un rayon de courbure de la seconde portion de surface incurvée (22b2).

3. Conteneur de délamination (20) selon la revendication 1 ou 2,
dans lequel un élément de pompe (60) qui éjecte un contenu de la couche interne (12) en pressurisant une portion supérieure est fixé à la portion col (13), et
une longueur axiale allant de la portion supérieure de l'élément de pompe (60) au bord périphérique externe de la portion épaulement (22a) est de 65 mm ou moins.

4. Procédé de fabrication pour le conteneur de délamination (20) selon l'une quelconque des revendications 1 à **3,** le procédé de fabrication comprenant :
une première étape de moulage par injection consistant à mouler par injection une première couche (11) d'une préforme (10) ayant une forme cylindrique à fond à partir d'un premier matériau résineux ;
une seconde étape de moulage par injection consistant à injecter un second matériau résineux différent du premier matériau résineux pour former une seconde couche (12) sur un côté périphérique interne de la première couche (11) ; et
une étape de moulage par soufflage consistant à mouler par soufflage, dans un état où existe une chaleur résiduelle du moulage par injection, la préforme (10) obtenue lors de la seconde étape de moulage par injection, pour fabriquer le conteneur de délamination (20),
dans lequel, lors de la première étape de moulage par injection, une première portion en creux (11a) est formée par une première portion en saillie (44) dans au moins une partie de la première couche (11),
lors de la seconde étape de moulage par injection, une seconde portion en creux (17) qui pénètre dans la première couche (11) et à travers laquelle est exposée une surface de la seconde couche (12) est formée dans la préforme (10) en insérant une seconde portion en saillie (54) dans la première portion en creux (11a), et
lors de l'étape de moulage par soufflage, la seconde portion en creux (17) est étirée pour former un trou d'introduction d'air (24) dans une couche externe (11) du conteneur de délamination (20).
